# EUROPÄISCHE PATENTSCHRIFT

(11) **EP 2 809 628 B1**
(45) Veröffentlichungstag und Bekanntmachung des Hinweises auf die Patenterteilung: **22.08.2018**
(21) Anmeldenummer: 13702643.1
(22) Anmeldetag: 04.02.2013
(51) Int. Cl.: C04B 35/573, C04B 35/83, C04B 35/52, C04B 35/634, C04B 35/80, F41H 5/04

(54) **FASERVERSTÄRKTE SILIZIUMCARBID-VERBUNDWERKSTOFFE**
FIBER-REINFORCED SILICON CARBIDE COMPOSITE MATERIALS
MATÉRIAUX COMPOSITES À BASE DE CARBURE DE SILICIUM RENFORCÉS PAR DES FIBRES

(30) Priorität: 03.02.2012 DE 102012201648
(43) Veröffentlichungstag der Anmeldung: 10.12.2014
(73) Patentinhaber: SGL Carbon SE, 65201 Wiesbaden (DE)
(72) Erfinder: DAMJANOVIC, Tanja, 86405 Meitingen (DE); KIENZLE, Andreas, 86405 Meitingen (DE); KRÄTSCHMER, Ingrid, 86405 Meitingen (DE)
(86) Internationale Anmeldenummer: PCT/EP2013/052185
(87) Internationale Veröffentlichungsnummer: WO 2013/113944

(56) Entgegenhaltungen:
- EP-A1- 1 845 074
- EP-A2- 1 098 161
- US-A- 5 939 216
- US-A- 5 955 391
- US-A1- 2002 142 146

## Beschreibung

Die vorliegende Erfindung bezieht sich auf faserverstärkte Siliziumcarbid (SiC)-Verbundwerkstoffe sowie auf ein Verfahren zur Herstellung solcher faserverstärkter Siliziumcarbid-Verbundwerkstoffe.

Die Verwendung von Keramiken als Panzerungssystem ist bekannt.

Beim Beschuss einer Panzerungsplatte mit einem Projektil erfolgt bei einer herkömmlichen Keramik durch Reflexion der Spannungswellen innerhalb der Keramikplatte ein Bruch der Keramikplatte selbst. Nur weil hinter der Keramikplatte eine weitere Rückseite zum Beispiel aus Metall angebracht ist, kann verhindert werden, dass das Projektil vollständig diese Panzerungsplatte durchdringt.

Bei der Verwendung für Panzerungsplatten ist es erforderlich, dass die Keramik eine deutlich höhere Härte aufweist als das Material des Projektils, das üblicherweise eine Vickers-Härte von etwa 6,5 bis 8,0 kN/mm² hat. Es wäre daher günstig, Materialien mit einer Härte von mehr als etwa 9,8 kN/mm² zu verwenden. Wenn die Keramik zu weich ist, dringt der Projektilkern durch die Keramik hindurch, weil er durch die Keramik nicht beschädigt wird.

Es gibt jedoch auch Munition mit deutlich höherer Härte, wenn beispielsweise eine Munition mit einem Kern aus Wolframcarbid in einer Nickel-Eisen-Matrix verwendet wird. In einem solchen Fall kann die Härte auf beispielsweise ca. 11 kN/mm² ansteigen. Keramikmaterialien aus Siliziumcarbid haben eine deutlich höhere Härte und können einem solchen Projektil widerstehen.

Inzwischen werden anstatt herkömmlicher Keramiken auch faserverstärkte Verbundwerkstoffe mit keramischer Matrix als Schutz vor Projektilen eingesetzt. Sie zeigen eine begrenzte Schädigung des Werkstoffs durch das auftreffende Projektil, so dass ein Schutz durch den Verbundwerkstoff gegen Mehrfachbeschuss aus einer automatischen Waffe gegeben ist (Multi-hit). Allerdings ist die Schutzwirkung gegen Projektile im Vergleich zu den bekannten Keramiken noch eher gering.

Faserverstärkte Verbundwerkstoffe mit keramischer Matrix zeichnen sich im allgemeinen durch eine hohe Festigkeit und Steifigkeit bei gleichzeitig geringem Gewicht aus. Diese Eigenschaften bleiben auch bei hohen Temperaturen erhalten. Die faserverstärkten Verbundwerkstoffe haben eine hohe Wärmeleitfähigkeit und gleichzeitig eine niedrige Wärmeausdehnung und somit eine ausgezeichnete Temperaturwechselbeständigkeit.
Ausgehend von mit Kohlenstofffasern verstärkten Verbundwerkstoffen mit Kohlenstoffmatrix werden zunehmend Verbundwerkstoffe mit SiC als Matrix entwickelt, wobei als verstärkende Fasern Kohlenstofffasern (C/SiC) und Siliciumcarbidfasern (SiC/SiC) verwendet werden.
Gegenwärtig werden Schutzplatten oder Schutzteile hergestellt, die technologisch auf gesintertem SiC, heißgepresstem SiC, SiSiC und LPS SiC (Liquid Phase Sintered Silicon Carbide) basieren. Nachteilig an diesen Herstellungsverfahren sind Einschränkungen bei der Herstellung dickerer Platten sowie komplexer Geometrien.
Die EP1098161B1 beschreibt einen Verbund aus einem Backing aus Metall oder Gewebe und einer Platte von mindestens 2,4 mm Dicke aus einem faserverstärkten keramischen Werkstoff mit einer Matrix enthaltend 55 bis 80 Gewichtsprozent Siliziumcarbid, 10 bis 40 Gewichtsprozent Kohlenstoff und 2 bis 20 Gewichtsprozent Silizium bezogen auf die Gesamtmasse des Verbundwerkstoffs, wobei der Faseranteil des Verbundwerkstoffs 8 bis 30 Gewichtsprozent des Gesamtgewichts beträgt. Die mittlere Faserlänge der Verstärkungsfasern beträgt 0,5 bis 5 mm und die Fasern sind mit mindestens einer Schicht graphitierten Kohlenstoffs beschichtet.

US2002/142146 zeigt Siliziumkarbid-Verbundwerkstoffe umfassend eine SiC Matrix und Faserbündel. Die Bündel haben eine Länge von 2-10 mm und eine Breite von 0,1 mm. Die Anfangsmischung enthält 10-40 Gew.-% an Fasern. Beispiel 1 zeigt einen SiC Verbundwerkstoff mit einer Dichte von 3,1 g/cm³.

Der verhältnismäßig hohe Faseranteil führt zu einer Erhöhung der Multihitfähigkeit, bewirkt jedoch auch eine Absenkung der ballistischen Leistungsfähigkeit (Performance), wodurch die Schutzwirkung herabgesetzt wird. Ballistische Schutzvorrichtungen umfassen eine Kombination aus dem faserverstärkten keramischen Werkstoff und einem Backing.
Bei herkömmlichen Siliziumcarbid-Verbundwerkstoffen ohne Kohlenstofffaseranteil wird eine Zerstörung von Plattenstrukturen insbesondere um das Einschussloch beobachtet. Zur Vermeidung dieses Problems werden Platten aus mehreren kleinen Segmenten aufgebaut. Um möglichst kleine Spalten zwischen den einzelnen Segmenten zu erhalten, müssen diese genau bearbeitet und aufwändig auf eine Trägerstruktur geklebt werden. Bei Beschuss werden nur einzelne Segmente zerstört, wodurch Schäden räumlich begrenzt werden und dadurch eine Multihitperformance erreicht wird. Mit den herkömmlichen Keramiktechnologien ist die Herstellung von dicken, groben und steifen Platten schwierig, wenn nicht gar unmöglich. Ferner ist auch die Herstellung von komplexen Geometrien basierend auf monolithischer Keramik schlecht umsetzbar.

Ausgehend von dem oben genannten Stand der Technik ist es die Aufgabe der vorliegenden Erfindung, multihitfähige keramische Bauteile herzustellen, die eine deutlich verbesserte ballistische Schutzwirkung aufweisen und im Vergleich zu bekannten Bauteilen eine höhere Homogenität bezüglich ihrer Eigenschaften, insbesondere geringere Dichteschwankungen und eine verringerte Schwindung aufweisen, und zwar insbesondere auch dann, wenn diese vergleichsweise groß sind und eine komplexe bzw. komplizierte Form aufweisen.

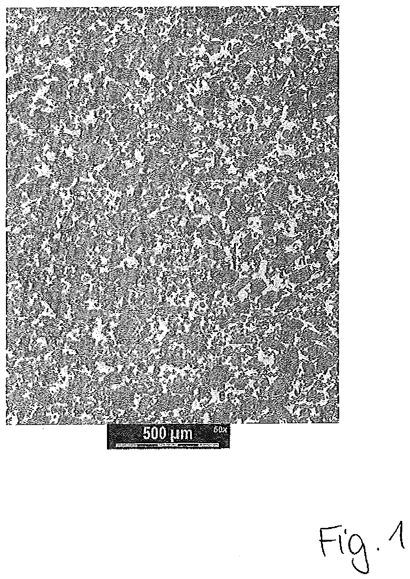

Diese Aufgabe wird unter anderem durch die Zugabe einer geringen Menge von speziell geschützten Kohlenstofffaserbündeln definierter Geometrie gelöst, wobei die Kohlenstofffaserbündel in eine SiC Matrix mit hoher Dichte homogen verteilt werden. Figur 1 zeigt einen Schliff des erfindungsgemäßen Materials.

Die definierte Geometrie der eingesetzten Faserbündel ist im Wesentlichen quaderförmig, bevorzugt quaderförmig, sodass sie in Länge, Breite und Dicke angegeben werden kann. Die Geometrie kann von der exakten Quaderform, also von den gemäß mathematischer Definition exakt rechten Winkeln eines Quaders abweichen, solange es möglich ist, die Geometrie der Faserbündel in Länge, Breite und Dicke zu beschreiben.

Gemäß Anspruch 1 umfassen die erfindungsgemäßen Siliziumcarbid-Verbundwerkstoffe eine SiC Matrix und besitzen eine Dichte von 2,95 bis 3,05 g/cm³, wobei die Ausgangsstoffe für die Herstellung der Siliziumcarbid-Verbundwerkstoffe 0,5 bis 10 Gew.-% mit Phenolharz imprägnierte Faserbündel, bezogen auf das Gesamtgewicht der Ausgangsstoffe, umfassen, wobei die Faserbündel eine Länge von 6 bis 20 mm, eine Breite von 0,2 bis 3 mm und eine Dicke von 0,1 bis 0,8 mm aufweisen und wobei die Faserbündel einen ausgehärteten Phenolharzanteil von bis zu 45 Gew.-% aufweisen.

Die Bereichsangaben für Länge, Breite und Höhe der Faserbündel sind dabei keine Mittelwerte einer Längen-, bzw. Breiten-, bzw. Dickenverteilung. Es werden vielmehr Faserbündel mit definierter Geometrie eingesetzt, die innerhalb der genannten Bereichsangaben liegt.

Der angegebene Gewichtsanteil der Faserbündel von 0,5 bis 10 Gew.-% bezieht sich erfindungsgemäß auf die für die Grünkörperherstellung verwendeten Ausgangsmaterialien. Diese werden weiter unten definiert und näher beschrieben (siehe Verfahrensschritt a). Zu den in Anspruch 1 genannten Ausgangsstoffen zählen daher nicht das bei der Silizierung infiltrierte Material sowie das nach dem Pressvorgang gegebenenfalls infiltrierte Harz. Bevorzugt ist ein Gewichtsanteil der Faserbündel von 1,5 bis 10 Gew.-%, weiter bevorzugt von 2 bis 10 Gew.-%.

Das eingesetzte mit Phenolharz imprägnierte Faserbündel ist also ein faserverstärkter Kunststoff, im bevorzugten Falle von Carbonfasern, ein carbonfaserverstärkter Kunststoff (CFK). Im Gegensatz dazu werden im Stand der Technik carbonisierte Faserbündel eingesetzt, wobei das ursprünglich vorhandene Harz durch Temperaturbehandlung in Kohlenstoff umgewandelt wurde, wodurch ein faserverstärkter Kohlenstoff, beispielsweise ein carbonfaserverstärkter Kohlenstoff (CFC) entsteht.

Es ist bevorzugt, dass die Faserbündel eine Länge von 8 bis 12 mm, eine Breite von 0,5 bis 2 mm, weiter bevorzugt eine Breite von 0,5 bis 1 mm und eine Dicke von 0,2 bis 0,7 mm aufweisen, weiter bevorzugt eine Dicke von 0,2 bis 0,5 mm.

Als Ausgangsmaterial für die Fasern kann auch ein organisches Polymer wie zum Beispiel Polyacrylnitril verwendet werden.

Als Fasern können neben Kohlenstoff- und Graphitfasern auch weitere Fasern auf Basis von Silizium, Kohlenstoff, Bor, Stickstoff, Aluminium oder Mischungen hiervon eingesetzt werden.

Grundsätzlich sollte bei der Auswahl der Fasern das Kriterium erfüllt sein, dass diese Fasern zumindest bis 1600°C temperaturbeständig sind, damit sie bei der Infiltration mit schmelzflüssigen Materialien nicht gleich beschädigt werden. Herkömmliche Materialien weisen keinen Faserschutz (Hülle) auf, so dass z.B. ungeschützte Kohlenstofffasern bei der Infiltration mit Silizium angegriffen werden und es unmöglich ist, ein duktiles Material zu erhalten. Die erfindungsgemäß verwendeten Fasern weisen daher vorteilhafterweise eine Schutzbeschichtung auf. Diese Beschichtung besteht bevorzugt aus mindestens einer Kohlenstoff- oder Graphitschicht, die durch Verkoken von z.B. Kunstharzen und/oder anderen kohlenstoffspendenden Stoffen und optional nachfolgendes Graphitieren entstehen.

Es ist bevorzugt, dass die SiC Matrix SiC Pulver mit der Körnung F150 und/oder F360 und zusätzlich die Rohstoffe carbonisierte Cellulosefaser und/oder Acetylenkoks und/oder Holzkohle und/oder Phenolharz in flüssiger und/oder Pulverform enthält. Die Bezeichnung der Korngröße richtet sich nach der FEPA-Norm der Fédération Europeenne des Fabricants des Produits Abrasifs.

Angesichts der hohen Bruchfestigkeit der Bauteile ist es nicht unbedingt erforderlich, die erfindungsgemäßen Elemente mit einer rückwärtigen Verstärkung zu versehen, wobei das Verstärkungsmittel (Backing) auf die Rückseite des Verbundwerkstoffs geklebt wird, um eine beschußfeste Schutzplatte zu erhalten. Vielmehr kann der Verbundkörper selbst bereits diese Schutzplatte, also ohne Backing, darstellen. Allerdings ist die Dicke eines Bauteils aus einem erfindungsgemäßen Verbundwerkstoffs ohne Backing, bei gleicher Wirkung, größer als die einer Keramikplatte mit Backing.

Ein weiterer Gegenstand der vorliegenden Erfindung ist ein Verfahren zur Herstellung von Siliziumcarbid-Verbundwerkstoffen, umfassend die Schritte:
a) Mischen/Vermengen von Harz, mit Phenolharz imprägnierte und ausgehärtete Faserbündel mit einem Phenolharzanteil von bis zu 45 Gew.-% und mit einer Länge von 6 bis 20 mm, einer Breite von 0,2 bis 3 mm und einer Dicke von 0,1 bis 0,8 mm, wobei der Anteil der Faserbündel 0,5 bis 10 Gew.-% bezogen auf das Gesamtgewicht der Ausgangsstoffe in diesem Schritt a) beträgt und zusätzlich Holzkohle (bevorzugt mittlere Korngröße) oder zusätzlich Acetylenkoks oder zusätzlich SiC-Pulver in den Korngrößen F150 und/oder F360 oder zusätzlich Abrocarb oder zusätzlich SiC-Pulver in den Korngrößen F150 und/oder F360 und Abrocarb oder zusätzlich SiC-Pulver in den Korngrößen F150 und/oder F360, Abrocarb und Acetylenkoks;
b) Verdichtung in einer Pressform bei erhöhtem Druck und erhöhter Temperatur;
c) optional Imprägnieren mit einem flüssigen Phenolharz in einem Autoklaven bei erhöhtem Druck und erhöhter Temperatur;
d) Carbonisieren unter Schutzgas in einem Temperaturbereich von 850 bis 950°C;
e) optional Graphitieren unter Schutzgas in einem Temperaturbereich von 1850 bis 2100°C;
f) optional Bearbeiten des entstandenen Materials und Herausfräsen von Bauteilen mit komplexer Geometrie und
g) Silizieren im Vakuum in einem Temperaturbereich von 1600 bis 1750 °C und einer Haltezeit von 60 bis 90 Minuten.

Bevorzugt wird im erfindungsgemäßen Verfahren zwischen den Schritten b) und d) ein Schritt des Imprägnierens (Schritt c) mit einem flüssigen Phenolharz in einem Autoklaven bei erhöhtem Druck und erhöhter Temperatur durchgeführt.

Bevorzugt wird im erfindungsgemäßen Verfahren zwischen den Schritten d) und f) bzw. g) ein Schritt des Graphitierens (Schritt e) unter Schutzgas in einem Temperaturbereich von 1850 bis 2100°C durchgeführt.

Das Harz in Schritt a) umfasst bevorzugt ein Phenolharz. Phenolharz ist deshalb bevorzugt, da nach dem Carbonisieren ein gegenüber anderen Harzen hoher Kohlenstoffrückstand verbleibt, wodurch bei der Silizierung mehr SiC entsteht, was letztlich zu einer höheren Stabilität des Werkstoffs führt.

Als das Faserbündel in Schritt a) wird bevorzugt "CC3 grün" verwendet. Als CC3 grün wird ein mit Phenolharz imprägniertes Carbonfaserbündel, mit einem Phenolharzanteil von bis zu 45 Gew.-% bezeichnet, welches im Wesentlichen quaderförmig ist und eine Länge von 9,8 mm, eine Breite von 1mm und eine Dicke Dicke von 0,2-0,5 mm aufweist. Das Phenolharz in dem CC3 grün wurde dabei bevorzugt bei einer Temperatur von 180°C ausgehärtet. Der Zusatz "grün" bedeutet dabei, dass sich das Faserbündel noch im CFK-Zustand, also nicht in carbonisierter Form befindet. Eine bevorzugte Herstellungsmethode des eines geeigneten Carbonfaserbündels wird in dem Patent EP 1645671 B1 (siehe dort Beispiele 1 und 2) beschrieben.

Das Einsetzen des Faserbündels im "grünen" Zustand, also im CFK-Zustand, hat unter anderem den Vorteil, dass es bei der Vermengung mit den weiteren Ausgangsstoffen und dem anschließenden Pressvorgang formstabil bleibt. Ein bereits carbonisiertes Faserbündel ist dagegen weniger stabil und würde daher beim Misch- und Pressvorgang seine ursprüngliche Form verlieren. Weiterhin würde ein carbonisiertes Faserbündel in den Schritten a) und c) erneut Phenolharz aufnehmen, was zur Folge hätte, dass der resultierende Kohlenstoffanteil im Faserbündel nach dem Carbonisieren (Schritt d) höher ist. Der im Falle des "grünen" Faserbündels wiederum niedrigere Kohlenstoffanteil führt bei der Silizierung zu einer besseren Anbindung zwischen SiC Matrix und Faserbündel. Dadurch besitzen die Bündel und die Matrix einen ähnlicheren thermischen Ausdehnungskoeffizienten, was letztlich zu einem stabileren Material führt.

Als "Abrocarb" wird eine carbonisierte, gemahlene Cellulosefaser bezeichnet, wobei die betreffende Cellulose aus Holz gewonnen wurde. Bevorzugt ist das Abrocarb ligninfrei und wird als Pulver mit einer mittleren Korngröße von <20µm eingesetzt.

Der in den Schritten b) und c) genannte erhöhte Druck ist nicht besonders eingeschränkt. Geeignete Drücke sind dem Fachmann in diesem technischen Gebiet bekannt. Bevorzugt beträgt der Druck jedoch 0,5 bis 3 MPa, weiter bevorzugt 0,5 bis 2 MPa.

Die in den Schritten b) und c) genannte erhöhte Temperatur ist nicht besonders eingeschränkt. Geeignete Temperaturen sind dem Fachmann in diesem technischen Gebiet bekannt und sollten, wie der Fachmann weiss, grundsätzlich überhalb der Aushärtetemperatur des verwendeten Harzes liegen, bevorzugt über 110°C, weiter bevorzugt 130 bis 200°C, noch weiter bevorzugt 150 bis 180 °C

Mit den erfindungsgemäßen Verfahrensschritten a) und b) wird ein sogenannter Grünkörper hergestellt, welcher im weiteren Verlauf des Verfahrens u.a. carbonisiert und siliziert wird. Erfindungsgemäß ist der Anteil der im Grünkörper enthaltenen Faserbündel 1,5 bis 10 Gew.-% bezogen auf das Gesamtgewicht der Ausgangsstoffe des Grünkörpers, also der in Schritt a) genannten Ausgangsstoffe. Die Menge an Harz, welches gegebenenfalls in Schritt c) zugefügt wird sowie die Menge an Material, welches bei der Silizierung in Schritt g) zugefügt wird, sind damit bei der Bestimmung des Gewichtsanteils der Faserbündel ausser acht zu lassen.

Der Acetylenkoks liegt bevorzugt als kugelförmiger Kohlenstoff mit zwiebelschalenartigem Aufbau vor, welcher aus der Verkohlung von Acetylen gewonnen wird.

Bei der Silizierung in Schritt g) kommen neben Silizium auch andere Materialien als Infiltrationsmaterial in Betracht, die dem Silizium hinzugegeben werden. Grundsätzlich müssen die zur Infiltration verwendeten Materialien in der Lage sein, in einem Temperaturbereich von bis zu 1800°C zu schmelzen. Als weitere Infiltrationsmaterialien kommen auch Aluminium, Bor, Magnesium, Stickstoff, Kohlenstoff und deren Verbindungen oder Mischungen, sowie Silizide in Betracht.

Besonders bevorzugt ist auf plattenförmige, erfindungsgemäße Siliziumcarbid-Verbundwerkstoffe ein Backing aus Metallplatten und einem Gewebe aus Fasern aufgeklebt, wobei die Dicke des Backing-Gewebes bis zu 15 mm beträgt. Ein solcher Verbund ist geeignet zur Absorption mindestens einer stoßartigen, punktuellen Belastung.

Die gemäß der vorliegenden Erfindung hergestellten faserverstärkten Siliziumcarbid-Verbundwerkstoffe sind für eine Vielzahl von ballistischen Anwendungen wie Schutzpanzerungen für zivile und militärische Einsatzgebiete geeignet.

Ein besonderer Vorteil der Verwendung der erfindungsgemäßen Siliziumcarbid-Verbundwerkstoffe besteht darin, dass Bauteile direkt in der Form eines gewünschten Strukturbauteils hergestellt werden können, so dass sich Formgebungsschritte nach der Herstellung der Bauteile vermeiden lassen und somit eine Kostenreduzierung bei der Herstellung von beispielsweise Schutzpanzerungen erzielt wird. Daher können auf die genannte Weise überraschend auch große und komplexe Bauteile mit hoher Exaktheit und Homogenität gefertigt werden. Dabei können unerwünschte Dichtegradienten in dem Bauteil vermieden werden.

Es ist bevorzugt, dass die erfindungsgemäßen Siliziumcarbid-Verbundwerkstoffe für Schutzpanzerungen gegen ballistische Einwirkungen oder Beschuss mit Projektilen verwendet werden.

Weiter bevorzugt werden die erfindungsgemäßen Siliziumcarbid-Verbundwerkstoffe zur Panzerung von Automobilen, militärischen Kraftfahrzeugen einschließlich Panzern, Flugzeugen, Helikoptern, Schiffen, Bahnfahrzeugen, Raumfahrzeugen, Tresoren und feststehenden Objekten verwendet. Zusätzlich bevorzugt ist ferner die Anwendung von erfindungsgemäßen Siliziumcarbid-Verbundwerkstoffen in Schutzwesten.

Gerade die hohe Werkstoffdichte des durch das erfindungsgemäße Verfahren hergestellten Verbundwerkstoffs resultiert in einer überraschend günstigen geschossbrechenden Wirkung. Gegenüber monolithischen Keramiken weisen die erfindungsgemäßen faserverstärkten Keramiken außerdem eine wesentlich höhere Bruchzähigkeit auf. Die auf den Werkstoff einwirkende mechanische Impulsenergie eines Projektils wird über innere energieverzehrende Effekte im Verbundkörper absorbiert, wobei in den Bereichen der Matrix zwischen den Fasern Mikrorisse induziert werden, die nach und nach die Energie der Geschosse aufnehmen. Hierbei erfolgt eine Abflachung der auftreffenden Projektile, wobei das Geschoss abgebremst wird und eine Umwandlung der kinetischen Energie in Energie zur Rissbildung erfolgt.

Eine weitere Anwendung nutzt in vorteilhafter Weise die durch die hohe Werkstoffdichte hervorgerufene gute Polierbarkeit der Verbundwerkstoffoberflächen. Dabei ist vorgesehen, den Verbundwerkstoff beispielsweise für Satellitenspiegel zu verwenden.

Aufgrund der hohen Festigkeit, Steifigkeit und Verschleißfestigkeit kann der erfindungsgemäße Verbundwerkstoff auch direkt als Strukturbauteil hochbelasteter Maschinenkomponenten eingesetzt werden.

**Tabelle1: Übersicht der durchgeführten Versuche**

| | Experiment 1 | Experiment 2 | Experiment 3 | Experiment 4 | Experiment 5 | Experiment 6 |
|---|---|---|---|---|---|---|
| Bestandteile | [Gew.%] | [Gew. %] | [Gew. %] | [Gew. %] | [Gew. %] | [Gew. %] |
| Harz | 7,4 | 20,0 | 20,0 | 20,0 | 29,5 | 38,4 |
| Holzkohle | 4,6 | | | | | |
| SiC F 150 | 43,1 | 37,2 | 35,6 | 34,9 | | |
| SiC F 360 | 43,1 | 37,2 | 35,6 | 34,9 | | |
| CC3 grün | 1,9 | 1,6 | 5,0 | 1,5 | 1,6 | 1,6 |
| Abrocarb | | 4,0 | 3,8 | 3,7 | | 60,0 |
| Acetylenkoks | | | | 5,0 | 68,9 | |

### Versuch 1:

In einem Kneter werden nach Tabelle 1 die Anteile von Harz (Norsophen 1203), Holzkohle, SiC F150, SiC F360 und CC3 (im CFK Zustand: 1mm breit, 9,6 mm lang und 0,4 mm dick) im Zeitraum von 1 Stunde vermengt. Die so homogenisierte Pressmasse wird aus dem Mischer entnommen und verpresst. Für eine 550 mm*550 mm *60 mm Platte werden in eine Pressform 39 kg der Mischung eingewogen und bei einem Druck von 2 MPa und einer Temperatur von 170 °C verdichtet. Zur Vervollständigung des Aushärtens wird die Platte in der Presse unter Druck und Temperatur für 2 Stunden gehalten. Nach dem Ausformen der ausgehärteten CFK Platte (mit einer Dichte von 1,8 g/cm³) wird diese unter Vakuum und Druck in einem Autoklaven mit einem flüssigen Phenolharz imprägniert. Die so behandelte Platte wird anschließend unter Schutzgasatmosphäre auf eine Temperatur von 900°C erhitzt. Hierbei kommt es zu einer Umwandlung des Phenolharzes zu Kohlenstoff. Die resultierende Platte wird anschließend unter Schutzgas bei einer Temperatur von 2000°C getempert. Anschließend wird die Platte bearbeitet und Bauteile mit komplexer Geometrie herausgefräst. Diese Bauteile werden umgehend in einen Graphittiegel überführt und zusammen mit entsprechender Einwaage von Silizium im Vakuum bei einer Temperatur von 1680°C und einer Haltezeit von 75 Minuten siliziert. Nach dem Abkühlen wird das Bauteil aus dem Tiegel entnommen. Das Bauteil hat bei diesem Prozess 80% seines Gewichtes zusätzlich an Silizium aufgenommen und mit dem Kohlenstoff teilweise in SiC umgewandelt. Die Dichte des Bauteils nach dem Silizieren beträgt 2,99 g/cm³.

### Versuch 2:

In einem Intensivmischer werden nach Tabelle 1 die Anteile von Harz (Bakelite Harzpulver), carbonisierter gemahlener Cellulose Fasern (10 µm Faserlänge), SiC F150, SiC F360 und CC3 (im CFK Zustand: 1mm breit, 9,6 mm lang und 0,4 mm dick) im Zeitraum von 10 Minuten bei einer Drehzahl von 220 U/min vermengt. Die so homogenisierte trockene Pressmasse wird aus dem Mischer entnommen und verpresst. Für eine 550 mm*550 mm *60 mm Platte werden in eine Pressform 39 kg der Mischung eingewogen und bei einem Druck von 0,5 MPa und einer Temperatur von 170 °C verdichtet. Zur Vervollständigung des Aushärtens wird die Platte in der Presse unter Druck und Temperatur für 2 Stunden gehalten. Die Platte wird anschließend unter Schutzgasatmosphäre auf eine Temperatur von 900°C erhitzt. Hierbei kommt es zu einer Umwandlung des Phenolharzes zu Kohlenstoff. Anschließend wird die Platte bearbeitet und Bauteile mit komplexer Geometrie herausgefräst. Diese Bauteile werden umgehend in einen Graphittiegel überführt und zusammen mit entsprechender Einwaage von Silizium im Vakuum bei einer Temperatur von 1680°C erhitzt und einer Haltezeit von 75 Minuten siliziert. Nach dem Abkühlen wird das Bauteil aus dem Tiegel entnommen. Das Bauteil hat bei diesem Prozess 80% seines Gewichtes zusätzlich an Silizium aufgenommen und mit dem Kohlenstoff teilweise in SiC umgewandelt. Die Dichte des Bauteils nach dem Silizieren beträgt 3,05 g/cm³.

### Versuch 3:

In einem Intensivmischer werden nach Tabelle 1 die Anteile von Harz (Bakelite Harzpulver), carbonisierter gemahlener Cellulose Fasern (10 µm Faserlänge), SiC F150, SiC F360 und CC3 (im CFK Zustand: 1mm breit, 9,6 mm lang und 0,4 mm dick) im Zeitraum von 10 Minuten bei einer Drehzahl von 400 U/min vermengt. Die so homogenisierte trockene Pressmasse wird aus dem Mischer entnommen und verpresst. Für eine 550 mm*550 mm *60 mm Platte werden in eine Pressform 36 kg der Mischung eingewogen und bei einem Druck von 0,5 MPa und einer Temperatur von 170 °C verdichtet. Zur Vervollständigung des Aushärtens wird die Platte in der Presse unter Druck und Temperatur für 2 Stunden gehalten. Die Platte wird anschließend unter Schutzgasatmosphäre auf eine Temperatur von 900°C erhitzt. Hierbei kommt es zu einer Umwandlung des Phenolharzes zu Kohlenstoff. Anschließend wird die Platte bearbeitet und Bauteile mit komplexer Geometrie herausgefräst. Diese Bauteile werden umgehend in einen Graphittiegel überführt und zusammen mit entsprechender Einwaage von Silizium im Vakuum bei einer Temperatur von 1680°C und einer Haltezeit von 75 Minuten siliziert. Nach dem Abkühlen wird das Bauteil aus dem Tiegel entnommen. Das Bauteil hat bei diesem Prozess 80% seines Gewichtes zusätzlich an Silizium aufgenommen und mit dem Kohlenstoff teilweise in SiC umgewandelt. Die Dichte des Bauteils nach dem Silizieren beträgt 2,95 g/cm³.

### Versuch 4:

In einem Intensivmischer werden nach Tabelle 1 die Anteile von Harz (Bakelite Harzpulver), carbonisierter gemahlener Cellulose Fasern (10 µm Faserlänge), SiC F150, SiC F360 und CC3 (im CFK Zustand: 1mm breit, 9,6 mm lang und 0,4 mm dick) und Acetylenkoks (mit einer Körnung 0-500µm) im Zeitraum von 10 Minuten bei einer Drehzahl von 400 U/min vermengt. Die so homogenisierte trockene Pressmasse wird aus dem Mischer entnommen und verpresst. Für eine 550 mm*550 mm *60 mm Platte werden in eine Pressform 39 kg der Mischung eingewogen und bei einem Druck von 0,5 MPa und einer Temperatur von 170 °C verdichtet. Zur Vervollständigung des Aushärtens wird die Platte in der Presse unter Druck und Temperatur für 2 Stunden gehalten. Die Platte wird anschließend unter Schutzgasatmosphäre auf eine Temperatur von 900°C erhitzt. Hierbei kommt es zu einer Umwandlung des Phenolharzes zu Kohlenstoff. Anschließend wird die Platte bearbeitet und Bauteile mit komplexer Geometrie herausgefräst. Diese Bauteile werden anschließend in einen Graphittiegel überführt und zusammen mit Silizium im Vakuum bei einer Temperatur von 1680 °C erhitzt und einer Haltezeit von 75 Minuten siliziert. Nach dem Abkühlen wird das Bauteil aus dem Tiegel entnommen. Das Bauteil hat bei diesem Prozess 80% seines Gewichtes zusätzlich an Silizium aufgenommen und mit dem Kohlenstoff teilweise in SiC umgewandelt. Die Dichte des Bauteils nach dem Silizieren beträgt 2,97 g/cm³.

### Versuch 5:

In einem Intensivmischer werden nach Tabelle 1 die Anteile von Harz (Bakelite Harzpulver), CC3 (CFK Zustand: 1mm breit, 9,6 mm lang und 0,4 mm dick) und Acetylenkoks (mit einer Körnung 0-500µm) im Zeitraum von 10 Minuten bei einer Drehzahl von 1600 U/min vermengt. Die so homogenisierte trockene Pressmasse wird aus dem Mischer entnommen und verpresst. Für eine 550 mm*550 mm *60 mm Platte werden in eine Pressform 20 kg überführt und bei einem Druck von 1,0 MPa und einer Temperatur von 170 °C verdichtet. Zur Vervollständigung des Aushärtens wird die Platte in der Presse unter Druck und Temperatur für 2 Stunden gehalten. Die Platte wird anschließend unter Schutzgasatmosphäre auf eine Temperatur von 900°C erhitzt. Hierbei kommt es zu einer Umwandlung des Phenolharzes zu Kohlenstoff. Anschließend wird die Platte bearbeitet. Diese bearbeiteten Bauteile werden anschließend in einen Graphittiegel überführt und zusammen mit Silizium im Vakuum bei einer Temperatur von 1680 °C erhitzt und einer Haltezeit von 75 Minuten siliziert. Nach dem Abkühlen wird das Bauteil aus dem Tiegel entnommen. Das Bauteil hat bei diesem Prozess 110% seines Gewichtes zusätzlich an Silizium aufgenommen und mit dem Kohlenstoff teilweise in SiC umgewandelt. Die Dichte des Bauteils nach dem Silizieren beträgt 3,02 g/ cm³.

### Versuch 6:

In einem Intensivmischer werden nach Tabelle 1 die Anteile von Harz (Bakelite Harzpulver), CC3 (CFK Zustand: 1mm breit, 9,6 mm lang und 0,4 mm dick) und carbonisierter gemahlener Cellulose Fasern (10 µm Faserlänge) im Zeitraum von 10 Minuten bei einer Drehzahl von 1400 U/min vermengt. Die so homogenisierte trockene Pressmasse wird aus dem Mischer entnommen und verpresst. Für eine 550 mm*550 mm *60 mm Platte werden in eine Pressform 18 kg überführt und bei einem Druck von 1,0 MPa und einer Temperatur von 170 °C verdichtet. Zur Vervollständigung des Aushärtens wird die Platte in der Presse unter Druck und Temperatur für 2 Stunden gehalten. Die Platte wird anschließend unter Schutzgasatmosphäre auf eine Temperatur von 900°C erhitzt. Hierbei kommt es zu einer Umwandlung des Phenolharzes zu Kohlenstoff. Anschließend wird die Platte bearbeitet. Diese bearbeiteten Bauteile werden anschließend in einen Graphittiegel überführt und zusammen mit Silizium im Vakuum bei einer Temperatur von 1680 °C erhitzt und einer Haltezeit von 75 Minuten siliziert. Nach dem Abkühlen wird das Bauteil aus dem Tiegel entnommen. Das Bauteil hat bei diesem Prozess 110% seines Gewichtes zusätzlich an Silizium aufgenommen und mit dem Kohlenstoff teilweise in SiC umgewandelt. Die Dichte des Bauteils nach dem Silizieren beträgt 3,01 g/ cm³.

## Patentansprüche

1. Siliziumcarbid-Verbundwerkstoffe mit einer Dichte von 2,95 bis 3,05 g/cm³ umfassend eine SiC Matrix, wobei die Ausgangsstoffe für die Herstellung der Siliziumcarbid-Verbundwerkstoffe mit Phenolharz imprägnierte Kohlenstoff-Faserbündel mit einem Anteil von 0,5 bis 10 Gew.-% bezogen auf das Gesamtgewicht der Ausgangsstoffe, wobei die Kohlenstoff-Faserbündel einen ausgehärteten Phenolharzanteil von bis zu 45 Gew.-% aufweisen, umfassen, wobei die Kohlenstoff-Faserbündel eine Länge von 6 bis 20 mm, eine Breite von 0,2 bis 3 mm und eine Dicke von 0,1 bis 0,8 mm aufweisen, und wobei die Kohlenstoff-Faserbündel in der SiC Matrix mit hoher Dichte homogen verteilt sind.

2. Siliciumcarbid-Verbundwerkstoffe nach Anspruch 1, **dadurch gekennzeichnet, dass** die Kohlenstoff-Faserbündel eine Länge von 8 bis 12 mm, eine Breite von 0,5 bis 2 mm und eine Dicke von 0,2 bis 0,7 mm aufweisen.

3. Siliciumcarbid-Verbundwerkstoffe nach einem der Ansprüche 1 oder 2, **dadurch gekennzeichnet, dass** die Kohlenstoff-Faserbündel eine Länge von 8 bis 12 mm, eine Breite von 0,5 bis 1 mm und eine Dicke von 0,2 bis 0,5 mm aufweisen.

4. Verfahren zur Herstellung von Siliziumcarbid-Verbundwerkstoffen nach einem der vorangegangenen Ansprüche, umfassend die Schritte:
a) Mischen/Vermengen von Harz, mit Phenolharz imprägnierte und ausgehärtete Kohlenstoff-Faserbündel mit einem Phenolharzanteil von bis zu 45 Gew.-% und mit einer Länge von 6 bis 20 mm, einer Breite von 0,2 bis 3 mm und einer Dicke von 0,1 bis 0,8 mm, wobei der Anteil der Kohlenstoff-Faserbündel 0,5 bis 10 Gew.-% bezogen auf das Gesamtgewicht der Ausgangsstoffe in diesem Schritt a) beträgt, und zusätzlich Holzkohle (bevorzugt mittlere Korngröße) oder zusätzlich Acetylenkoks oder zusätzlich SiC-Pulver in den Korngrößen F150 und/oder F360 oder zusätzlich Abrocarb oder zusätzlich SiC-Pulver in den Korngrößen F150 und/oder F360 und Abrocarb oder zusätzlich SiC-Pulver in den Korngrößen F150 und/oder F360, Abrocarb und Acetylenkoks;
b) Verdichtung in einer Pressform bei erhöhtem Druck und erhöhter Temperatur;
c) optional Imprägnieren mit einem flüssigen Phenolharz in einem Autoklaven bei erhöhtem Druck und erhöhter Temperatur;
d) Carbonisieren unter Schutzgas in einem Temperaturbereich von 850 bis 950°C;
e) optional Graphitieren unter Schutzgas in einem Temperaturbereich von 1850 bis 2100°C;
f) optional Bearbeiten des entstandenen Materials und Herausfräsen von Bauteilen mit komplexer Geometrie und
g) Silizieren im Vakuum in einem Temperaturbereich von 1600 bis 1750 °C und einer Haltezeit von 60 bis 90 Minuten.

5. Verfahren zur Herstellung von Siiiziumcarbid-Verbundwerkstoffen nach Anspruch 4, **dadurch gekennzeichnet, dass** der optionale Schritt e) zwingend durchgeführt wird.

6. Verfahren zur Herstellung von Siliziumcarbid-Verbundwerkstoffen nach einem der Ansprüche 4 bis 5, **dadurch gekennzeichnet, dass** der optionale Schritt c) zwingend durchgeführt wird.

7. Verfahren zur Herstellung von Siliziumcarbid-Verbundwerkstoffen nach einem oder mehrerer der Ansprüche 4 bis 6, **dadurch gekennzeichnet, dass** auf plattenförmige Siliziumcarbid-Verbundwerkstoffe ein Backing ausgewählt aus Metallplatten und einem Gewebe aus Fasern aufgeklebt ist und die Dicke des Backing-Gewebes bis zu 15 mm beträgt.

8. Verwendung von Siliziumcarbid-Verbundwerkstoffen nach einem oder mehrerer der Ansprüche 1 bis 3 oder hergestellt gemäß einem Verfahren nach einem oder mehrerer der Ansprüche 4 bis 7, **dadurch gekennzeichnet, dass** Bauteile direkt in der Form eines gewünschten Strukturbauteils hergestellt werden.

9. Verwendung von Siliziumcarbid-Verbundwerkstoffen nach einem oder mehrerer der Ansprüche 1 bis 3 oder hergestellt gemäß einem Verfahren nach einem oder mehrerer der Ansprüche 4 bis 7 als Schutzpanzerung gegen ballistische Einwirkungen oder Beschuss mit Projektilen.

10. Verwendung von Siliziumcarbid-Verbundwerkstoffen gemäß Anspruch 9 zur Panzerung von Automobilen, militärischen Kraftfahrzeugen einschließlich Panzern, Flugzeugen, Helikoptern, Schiffen, Bahnfahrzeugen, Raumfahrzeugen, Tresoren und feststehenden Objekten,

11. Verwendung von Siliziumcarbid-Verbundwerkstoffen gemäß Anspruch 9 in Schutzwesten.

## Claims

1. Silicon carbide composites having a density of 2.95 to 3.05 g/cm³ comprising an SiC matrix, wherein the starting materials for preparing the silicon carbide composites comprise phenolic-resin-impregnated carbon fiber bundles in a proportion of 0.5 to 10 wt.% based on the total weight of the starting materials, wherein the carbon fiber bundles have a cured phenolic resin proportion of up to 45 wt.%, wherein the carbon fiber bundles have a length of from 6 to 20 mm, a width of from 0.2 to 3 mm, and a thickness of from 0.1 to 0.8 mm, and wherein the carbon fiber bundles are uniformly distributed in the high-density SiC matrix.

2. Silicon carbide composites according to claim 1, **characterized in that** the carbon fiber bundles have a length of from 8 to 12 mm, a width of from 0.5 to 2 mm, and a thickness of from 0.2 to 0.7 mm.

3. Silicon carbide composites according to either claim 1 or claim 2, **characterized in that** the carbon fiber bundles have a length of from 8 to 12 mm, a width of from 0.5 to 1 mm, and a thickness of from 0.2 to 0.5 mm.

4. Method for preparing silicon carbide composites according to any of the preceding claims, comprising the steps of:
a) mixing/blending resin, phenolic-resin-impregnated and cured carbon fiber bundles having a phenolic resin proportion of up to 45 wt.% and having a length of from 6 to 20 mm, a width of from 0.2 to 3 mm, and a thickness of from 0.1 to 0.8 mm, wherein the proportion of the carbon fiber bundles is 0.5 to 10 wt.% based on the total weight of the starting materials in this step a), and additionally charcoal (preferably medium particle size) or additionally acetylene coke or additionally SiC powder in particle sizes F150 and/or F360 or additionally Abrocarb or additionally SiC powder in particle sizes F150 and/or F360 and Abrocarb or additionally SiC powder in particle sizes F150 and/or F360, Abrocarb and acetylene coke;
b) compressing in a mold under increased pressure and increased temperature;
c) optionally impregnating with a liquid phenolic resin in an autoclave under increased pressure and increased temperature;
d) carbonizing under a protective gas in a temperature range of from 850 to 950°C;
e) optionally graphitizing under a protective gas in a temperature range of from 1850 to 2100°C;
f) optionally processing the produced materials and milling out components having a complex geometry; and
g) siliconizing in a vacuum in a temperature range of from 1600 to 1750°C and a holding time of from 60 to 90 minutes.

5. Method for preparing silicon carbide composites according to claim 4, **characterized in that** the optional step e) is compulsorily carried out.

6. Method for preparing silicon carbide composites according to either claim 4 or claim 5, **characterized in that** the optional step c) is compulsorily carried out.

7. Method for preparing silicon carbide composites according to one or more of claims 4 to 6, **characterized in that** a backing selected from metal plates and a woven fabric made of fibers is glued on planar silicon carbide composites, and the thickness of the backing woven fabric is up to 15 mm.

8. Use of silicon carbide composites according to one or more of claims 1 to 3 or prepared by a method according to one or more of claims 4 to 7, **characterized in that** components are produced directly in the form of a desired structural component.

9. Use of silicon carbide composites according to one or more of claims 1 to 3 or prepared by a method according to one or more of claims 4 to 7 as protective armoring against ballistic impacts or bombardment by projectiles.

10. Use of silicon carbide composites according to claim 9 for armoring automobiles, military vehicles including tanks, aircraft, helicopters, ships, rail vehicles, spacecraft, safes and stationary objects.

11. Use of silicon carbide composites according to claim 9 in protective vests.

## Revendications

1. Matériaux composites en carbure de silicium avec une densité de 2,95 à 3,05 g/cm³ comprenant une matrice de SiC, les matières premières pour la fabrication des matériaux composites en carbure de silicium comprenant des faisceaux de fibres de carbone imprégnées de résine phénolique avec une proportion de 0,5 à 10 % en poids par rapport au poids total des matières premières, les faisceaux de fibres de carbone présentant une proportion de résine phénolique durcie allant jusqu'à 45 % en poids, les faisceaux de fibres de carbone présentant une longueur de 6 à 20 mm, une largeur de 0,2 à 3 mm et une épaisseur de 0,1 à 0,8 mm, et les faisceaux de fibres de carbone étant répartis de manière homogène dans la matrice de SiC avec une densité élevée.

2. Matériaux composites à base de carbure de silicium selon la revendication 1, **caractérisés en ce que** les faisceaux de fibres de carbone présentent une longueur de 8 à 12 mm, une largeur de 0,5 à 2 mm et une épaisseur de 0,2 à 0,7 mm.

3. Matériaux composites à base de carbure de silicium selon l'une des revendications 1 ou 2, **caractérisés en ce que** les faisceaux de fibres de carbone présentent une longueur de 8 à 12 mm, une largeur de 0,5 à 1 mm et une épaisseur de 0,2 à 0,5 mm.

4. Procédé de fabrication de matériaux composites à base de carbure de silicium selon l'une des revendications précédentes, comprenant les étapes suivantes :
a) mélanger/homogénéiser de la résine, des faisceaux de fibres de carbone imprégnées de résine phénolique et durcies ayant une proportion de résine phénolique allant jusqu'à 45 % en poids et ayant une longueur de 6 à 20 mm, une largeur de 0,2 à 3 mm et une épaisseur de 0,1 à 0,8 mm, la proportion de faisceaux de fibres de carbone étant de 0,5 à 10 % en poids par rapport au poids total des matières premières dans cette étape a), et en outre du charbon de bois (de préférence de taille de grains moyenne) ou en outre de coke à acétylène ou en outre de poudre de SiC dans les tailles de grains F150 et/ou F360 ou en outre d'Abrocarb ou en outre de poudre de SiC dans les tailles de grains F150 et/ou F360 et d'Abrocarb ou en outre de poudre de SiC dans les tailles de grains F150 et/ou F360, d'Abrocarb et de coke à acétylène ;
b) compresser dans un moule à pression à une pression relevée et une température relevée ;
c) imprégner facultativement avec une résine phénolique liquide dans un autoclave à une pression relevée et une température relevée ;
d) carboniser sous gaz protecteur dans une plage de températures allant de 850 à 950°C ;
e) graphitiser facultativement sous gaz protecteur dans une plage de températures allant de 1850 à 2100°C ;
f) traiter facultativement le matériau résultant et découper par fraisage des composants ayant une géométrie complexe et
g) silicier sous vide dans une plage de températures allant de 1600 à 1750°C et avec un temps de séjour de 60 à 90 minutes.

5. Procédé de fabrication de matériaux composites à base de carbure de silicium selon la revendication 4, **caractérisé en ce que** l'étape facultative e) est réalisée obligatoirement.

6. Procédé de fabrication de matériaux composites à base de carbure de silicium selon l'une des revendications 4 à 5, **caractérisé en ce que** l'étape facultative c) est réalisée obligatoirement

7. Procédé de fabrication de matériaux composites à base de carbure de silicium selon l'une ou plusieurs des revendications 4 à 6, **caractérisé en ce qu'**un renfort choisi parmi des plaques métalliques et un tissu en fibres est collé sur des matériaux composites à base de carbure de silicium en forme de plaque et l'épaisseur du tissu de renfort va jusqu'à 15 mm.

8. Utilisation de matériaux composites à base de carbure de silicium selon l'une ou plusieurs de revendications 1 à 3 ou fabriqués selon un procédé selon l'une ou plusieurs des revendications 4 à 7, **caractérisé en ce que** des composants sont fabriqués directement sous la forme d'un composant structurel souhaité.

9. Utilisation de matériaux composites à base de carbure de silicium selon l'une ou plusieurs des revendications 1 à 3 ou fabriqués selon un procédé selon l'une ou plusieurs des revendications 4 à 7 comme blindage de protection contre des opérations balistiques ou le tir de projectiles.

10. Utilisation de matériaux composites à base de carbure de silicium selon la revendication 9 dans le blindage d'automobiles, de véhicules militaires y compris les blindés, les avions, les hélicoptères, les navires, les véhicules ferroviaires, les véhicules spatiaux, les coffres-forts et les objets fixes.

11. Utilisation de matériaux composites à base de carbure de silicium selon la revendication 9 dans les vestes de protection.
